# EUROPÄISCHE PATENTSCHRIFT

(11) **EP 3 129 122 B1**
(45) Veröffentlichungstag und Bekanntmachung des Hinweises auf die Patenterteilung: **05.05.2021**
(21) Anmeldenummer: 15716973.1
(22) Anmeldetag: 02.03.2015
(51) Int. Cl.: B01D 45/08

(54) **REINIGUNGSSYSTEM FÜR LACKPARTIKEL**
SEPARATION SYSTEM FOR PAINT OVERSPRAY
DISPOSITIF POUR ELIMINER DES EXCES DE PEINTURE HUMIDE

(30) Priorität: 07.04.2014 AT 2602014
(43) Veröffentlichungstag der Anmeldung: 15.02.2017
(60) Teilanmeldung: 16192585.4
(73) Patentinhaber: Brain Flash-Patententwicklungs GmbH, 9900 Lienz (AT)
(72) Erfinder: GAVRAN, Jadranko, A-9900 Lienz (AT); EDER, Michael, A-9900 Lienz (AT)
(74) Vertreter: Torggler & Hofinger Patentanwälte
(86) Internationale Anmeldenummer: PCT/AT2015/000033
(87) Internationale Veröffentlichungsnummer: WO 2015/154108

(56) Entgegenhaltungen:
- WO-A2-03/084638
- DE-A1-102008 021 225
- FR-A5- 2 186 844
- GB-A- 2 140 707
- JP-U- S6 187 511
- US-A- 3 744 222

## Beschreibung

Die vorliegende Erfindung betrifft ein Reinigungsmodul zur Reinigung eines Luftstroms gemäß den Merkmalen des Oberbegriffs des Anspruchs 1.

Faltbare Reinigungsmodule zu Abscheiden von Lackpartikeln sind aus der GB 2 140 707 A bekannt. Dabei sind mehrere Lagen Karton mittels Klebstoff, Klammern oder dergleichen verbunden.

Die modulare Anordnung von Filtermodulen aus Karton ist aus der WO 03/084638 A2 bekannt. Sie dienen der Abscheidung von Lackpartikeln bzw. von Lacknebel (overspray) aus einer Abluft einer Sprühkabine, in welcher beispielsweise Teile für ein KFZ lackiert werden.

Ein Filter für Farb-Sprühkabinen mit drei aus Karton bestehenden Prallwänden wird in der US 3744222 A offenbart.

Ein metallischer Ölabscheider wird in der JP S61 87511 U7 offenbart.

Die DE 102008021225 A1 offenbart ein Filtermodul mit einer luftundurchlässigen äußeren Wandung und innen liegenden Prallwänden, die aus Kunststoff gefertigt sind.

Die FR 2186844 A5 offenbart einen Gasfilter.

Bemerkenswert ist hierbei, dass eine sehr große Vielzahl an verschiedenen Lacken verwendet wird. Dadurch sind in der Abluft von Sprühkabinen verschiedenste Arten von Lackverunreinigungen vorhanden, welche sich beispielsweise durch Partikelgröße und Feuchtigkeitsanteil unterscheiden. Für relativ kleine, trockene Partikel müssen zur Abscheidung Labyrinthe mit kleinen Öffnungen und starken Umlenkungen bereit gestellt werden, sodass die Partikel durch Ihre Trägheit (bzw. durch die Fliehkraft) an Prallwänden des Labyrinths bzw. des Abscheiders gestoppt werden, während die gereinigte Luft hinter dem Filtermodul austritt.

Bei großen Partikelgrößen mit hohem Feuchtigkeitsanteil kann über kurze Zeit eine große Menge von Lack in einem Reinigungsmodul abgeschieden werden. Insbesondere dann, wenn die Reinigungsmodule im Boden der Sprühkabine angeordnet sind, resultiert dies in einer großen Belastung des aus Karton gefertigten Reinigungsmoduls, welche durch die Sogwirkung eines Gebläses zur Erzeugung des Luftstroms durch die Reinigungsmodule noch vergrößert wird. Dies führt bei Reinigungsmodulen nach dem Stand der Technik dazu, dass die darin vorhandenen Abscheidestrukturen unter ihrem mit Lack beladenen Eigengewicht zusammenfallen und ihre Funktion nicht mehr erfüllen.

Aufgabe der Erfindung ist es, ein Reinigungsmodul zu schaffen, welches einen verbreiterten Anwendungsbereich erlaubt, d. h. zur Abscheidung von Lackpartikeln und Lacknebel mit größerer Vielfalt geeignet sind, als dies im Stand der Technik der Fall ist.

Diese Aufgabe wird durch ein Reinigungsmodul mit den Merkmalen des Anspruchs 1 gelöst.

Erfindungsgemäß geschieht dies, indem der Abscheidestruktur durch das Vorsehen zumindest einer Stabilisierungswand eine erhöhte Stabilität verliehen wird.

Insbesondere kann es vorgesehen sein, dass Reinigungsteilstrukturen und/oder die Reinigungsmodule unabhängig voneinander austauschbar sind.

Weitere vorteilhafte Ausführungsformen sind in den abhängigen Ansprüchen definiert.

Erfindungsgemäß ist vorgesehen, dass die Reinigungsstruktur wenigstens zwei voneinander gesonderte Reinigungsteilstrukturen aufweist, welche über ein Öffnungselement am Hohlkörper aus dem Hohlkörper entnehmbar und/oder im Hohlkörper anordenbar sind. Durch die Bereitstellung eines Sets, in welchem zumindest zwei verschiedene Kombinationen von Reinigungsteilstrukturen im Hohlkörper anordenbar sind, kann eine noch breitere Anwendbarkeit erzielt werden.

Um auch sehr feine Lacknebel aus dem Luftstrom entfernen zu können, kann es vorgesehen sein, dass die wenigstens zwei Reinigungsteilstrukturen eine Filterstruktur umfassen. Derartige Filterstrukturen können verschiedenartig ausgebildet sein. Beispielsweise kann hier eine Matte oder ein Flies aus Glasfasern zum Einsatz kommen. Bevorzugte Dicken solcher Matten oder Vliese liegen bevorzugt unter 20 cm und besonders bevorzugt unter 10 cm. Außerdem kann als Filtermaterial sogenanntes Columbusmaterial verwendet werden. Dieses besteht aus Papier, vorzugsweise Altpapier, in welches parallele und versetzte Schlitze gestanzt oder geschnitten sind. Durch Zug quer zu den Schlitzen entstehen Öffnungen. Mehrere Lagen dieses Materials können vorteilhaft als Filtermaterial verwendet werden.

Abscheidestrukturen können ebenfalls auf verschiedene Arten ausgestaltet sein. Beispielsweise können diese nach dem Auffalten in einer Draufsicht rechteckige Strukturen sein. Aber auch rautenförmige Strukturen sind bekannt (beispielsweise vertrieben unter der Bezeichnung "Andreae").

Erfindungsgemäße Reinigungsmodule können in Einschubrahmen angeordnet werden. Diese Einschubrahmen können sich über eine Wand, die Decke oder den Boden der Sprühkabine erstrecken. In diesen Einschubrahmen können die Reinigungsmodule hintereinander angeordnet und einzeln herausgenommen bzw. ersetzt werden.

Bevorzugt vorgesehen können Abscheidestrukturen in verschiedenen geometrischen Abmessungen, insbesondere Stärken, vorgesehen sein.

Ebenso können Abscheidestrukturen vorgesehen sein, welche, insbesondere durch die Größe der Öffnungen, auf die Abscheidung von Partikeln unterschiedlicher Größe optimiert sind. Insbesondere können die Abscheidestrukturen so gestaltet sein, dass diejenigen mit größeren geometrischen Abmessungen, insbesondere Stärken, auf die Abscheidung größerer Partikel optimiert sind und umgekehrt.

Dies ermöglicht eine genaue Anpassung des Reinigungsmoduls an die vorliegende Verschmutzung im Luftstrom (Partikelgröße, Feuchtigkeitsgrad). Dies ermöglicht außerdem ein selektives Tauschen von hintereinander angeordneten Reinigungsmodulen, was von Vorteil ist, da auf verschiedene Partikelgrößen optimierte Abscheidestrukturen unterschiedlich schnell ihre Kapazitätsgrenze erreichen.

Weiterhin von Vorteil ist, dass die durch die selektive Tauschbarkeit der Reinigungsmodule Lagerhaltung im geringeren Umfang notwendig ist.

Für einen guten Sitz der Reinigungsteilstrukturen im Hohlkörper kann es vorgesehen sein, dass die Reinigungsteilstrukturen in einer Ansicht entlang einer Achse, welche beim im Hohlkörper angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers im Wesentlichen entspricht. Dies stellt außerdem sicher, dass kein Teilstrom des Luftstroms ungereinigt bleibt, weil kein Weg an den Reinigungsteilstrukturen vorbeiführt.

Besonders bevorzugt kann es vorgesehen sein, dass zumindest eine Abscheidestruktur zusammenfaltbar ist. Durch das verringerte Volumen wird die Lagerung und der Transport der Abscheidestrukturen erheblich erleichtert.

Dieser Effekt verstärkt sich noch, falls vorgesehen ist, dass die zumindest eine Abscheidestruktur nach dem Zusammenfalten im Wesentlichen flach ist.

Die verstärkende Wirkung einer Stabilisierungswand kann verbessert werden, indem das Zusammenfalten der Abscheidestruktur beim im Hohlkörper angeordneten Zustand durch Innenwandungen des Hohlkörpers gehemmt ist.

Bevorzugt kann es vorgesehen sein, dass die wenigstens eine Stabilisierungswand im Wesentlichen mittig bezüglich einer Richtung in der Ebene der Prallwände angeordnet ist. Dies kann die Verstärkungswirkung der Stabilisierungswand optimieren.

Die wenigstens eine Stabilisierungswand kann mit den wenigstens zwei Prallwänden verbunden sein, wobei dies vorzugsweise auf faltbare und/oder gelenkige Art und Weise der Fall ist. Einfach realisierbar ist dies beispielsweise über ein Filmscharnier. Dies ermöglicht eine sehr flache Struktur im zusammengefalteten Zustand, welche im entfalteten Zustand eine hohe Steifigkeit aufweist.

Weiterhin kann es bevorzugt vorgesehen sein, dass die wenigstens eine Stabilisierungswand im Wesentlichen parallel zum Luftstrom ausgerichtet ist. Denn insbesondere dann, wenn das Reinigungsmodul in einem Boden oder einer Decke einer Sprühkabine angeordnet ist, entspricht die Richtung des Luftstroms derjenigen Richtung der Hauptbelastung der Abscheidestruktur.

Ganz besonders bevorzugt kann es vorgesehen sein, dass der Hohlkörper und/oder zumindest eine Abscheidestruktur aus Karton, Papier oder Pappe besteht. Ein besonders einfaches Beseitigen bzw. Recyclen der Abscheidestrukturen bzw. der Reinigungsmodule wird hierdurch ermöglicht. Es ist aber durchaus auch denkbar Abscheidestrukturen und/oder Hohlkörper aus Metall, Kunststoff, Holz oder dergleichen zu fertigen.

In einer weiteren bevorzugten Ausführung kann vorgesehen sein, dass zumindest eine Abscheidestruktur wenigstens zwei im Wesentlichen parallel zum Luftstrom ausgerichtete Laschen aufweist, zwischen denen im Hohlkörper eine weitere Abscheidestruktur anordenbar ist. Dadurch ist es möglich, dass eine Abscheidestruktur für verschiedene vorgesehene geometrische Abmessungen, insbesondere Stärken, dient. Das bedeutet, sie kann entweder mit einer zwischen den Laschen angeordneten Abscheidestruktur eingesetzt werden, oder ohne. In letzterem Fall dienen die Laschen als Abstandhalter zu einer Innenwandung des Hohlkörpers oder einer weiteren Abscheidestruktur.

Weitere Vorteile und Einzelheiten der Erfindung sind anhand der Figuren, sowie der dazugehörigen Figurenbeschreibung ersichtlich. Dabei zeigen:
- Fig. 1a bis 1h: verschiedene perspektivische, schematische Darstellungen erfindungsgemäßer Reinigungsmodule,
- Fig. 2a bis 2h: perspektivische Darstellungen einer erfindungsgemäßen Abscheidestruktur in verschiedenen Faltzuständen,
- Fig. 3a bis 3c: eine weitere Ausführungsform einer erfindungsgemäßen Abscheidestruktur in verschiedenen Faltzuständen
- Fig. 4a und 4b: schematische Darstellungen verschiedener Kombinationsmöglichkeiten von erfindungsgemäßen Abscheidestrukturen in Reinigungsmodulen, sowie
- Fig. 5a bis 5e: Darstellungen von Anordnungsmöglichkeiten von erfindungsgemäßen Reinigungsmodulen in Einschubrahmen.

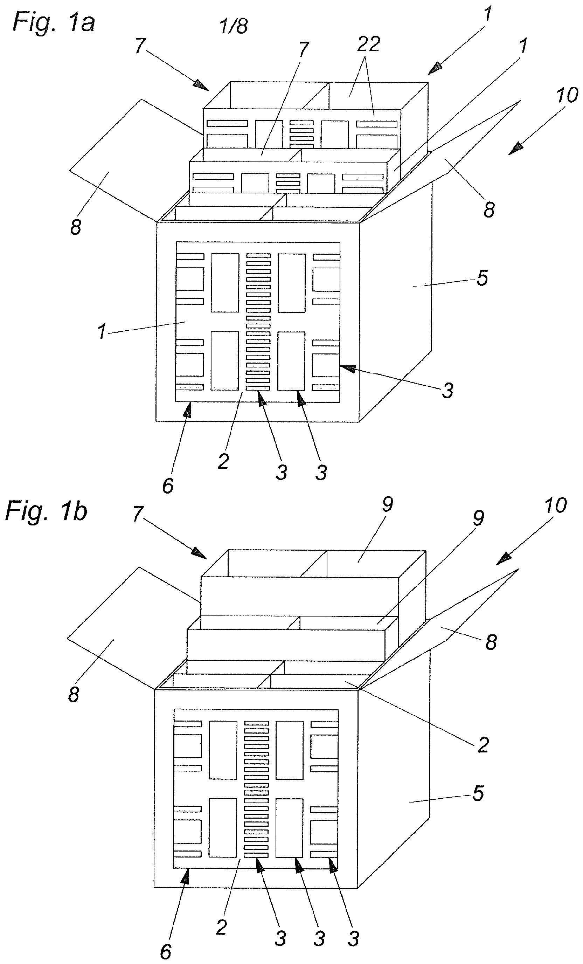

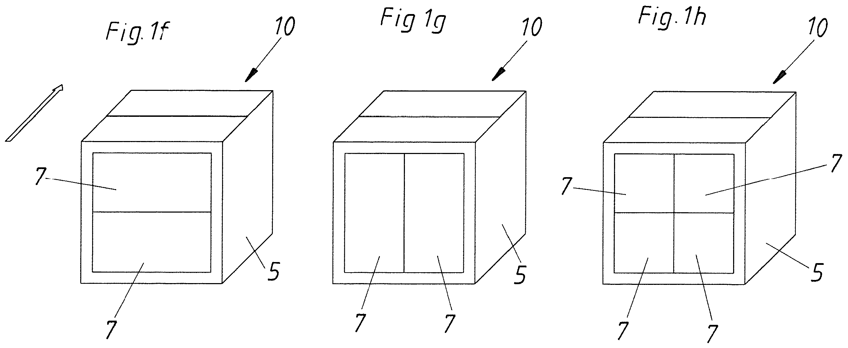

Das in Figur 1a dargestellte Reinigungsmodul 10 umfasst zunächst einen Hohlkörper 5, sowie eine Eintrittsöffnung 6 zum Eintritt des zu reinigenden Luftstroms. Da die Austrittsöffnung auf der Rückseite des Hohlkörpers 5 angeordnet ist, kann sie in diesen Darstellungen nicht erkannt werden. Die Austrittsöffnung ist im Wesentlichen analog zur Eintrittsöffnung 6 ausgebildet.

Der Hohlkörper 5 verfügt über - als Öffnungslaschen ausgebildete - Öffnungselemente 8. Diese sind in der vorliegenden Darstellung geöffnet, sodass der Blick aufs Innenleben des Hohlkörpers 5 frei wird. In Figur 1a sind mehrere Reinigungsteilstrukturen 7 dargestellt, welche in diesem Fall allesamt als Abscheidestrukturen 1 ausgebildet sind. Die Abscheidestrukturen 1 verfügen über Prallwände 2, welche mit Öffnungen 3 versehen sind. Der Übersichtlichkeit halber sind nicht alle Prallwände 2 und alle Öffnungen 3 mit Bezugszeichen versehen, da diese teilweise in einer Vielzahl vorliegen.

Figur 1b ist analog zu Figur 1a nur mit dem Unterschied, dass zwei der Reinigungsteilstrukturen 7 als Filterstrukturen 9 ausgebildet sind. Diese Filterstrukturen 9 umfassen Glasfasermatten oder Vliese, können aber auch Columbusmaterial oder ähnliches umfassen.

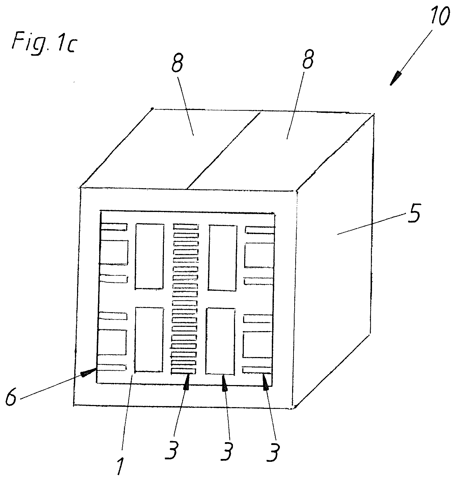

In Figur 1c ist erneut das Reinigungsmodul 10 dargestellt, dieses Mal jedoch mit geschlossenen Öffnungselementen 8. In diesem Zustand kann das Reinigungsmodul eingesetzt werden.

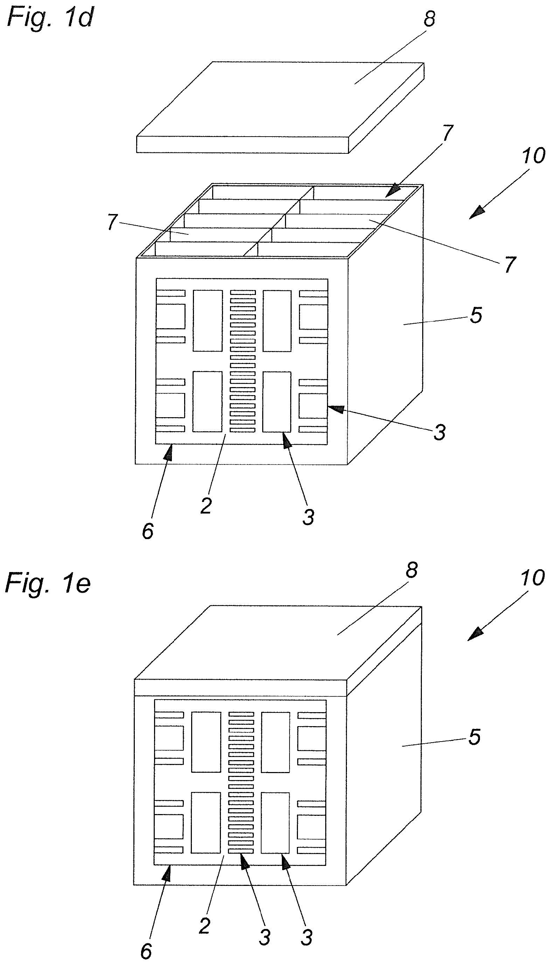

Die Öffnungselemente 8 können auch als abnehmbarer Deckel ausgeführt sein (schuhkartonartig), was in den Figuren 1d und 1e dargestellt ist. Ansonsten ist das Reinigungsmodul 10 aus den Figuren 1d und 1e analog zu denen aus den Figuren 1a bis 1c.

In den Figuren 1f bis 1h sind weitere Ausführungsformen dargestellt, wobei sich die Reinigungsteilstrukturen 7 in diesen Fällen nicht über die gesamte Querschnittsfläche (aus sicht des Luftstroms, welcher neben Figur 1f durch einen Pfeil angedeutet ist) des Hohlkörpers 5 erstrecken.

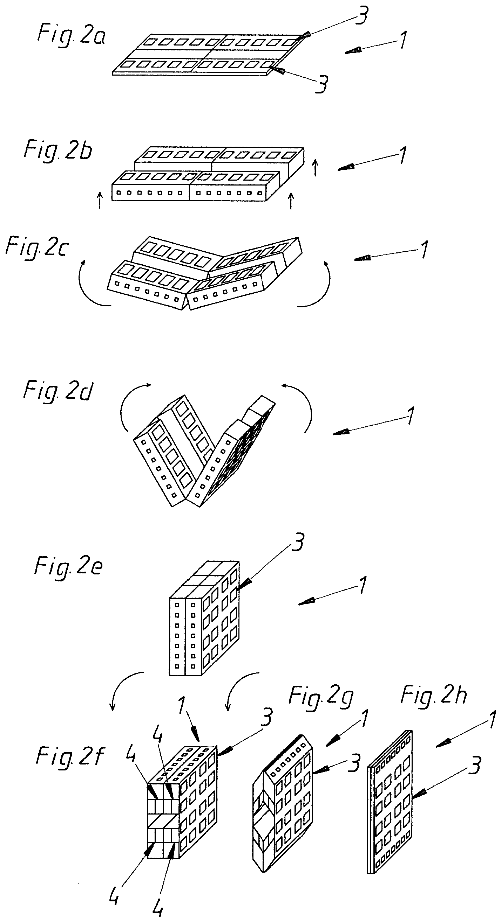

In den Figuren 2a bis 2h ist eine erste Ausführungsform einer erfindungsgemäßen Abscheidestruktur 1 in verschiedenen Faltzuständen dargestellt. Figur 2a zeigt dabei zunächst die Abscheidestruktur 1 im Auslieferungszustand. Teile der Struktur werden dann aufgefaltet (Figur 2b). Die gesamte Abscheidestruktur 1 wird danach noch einmal zusammengefaltet, wobei die in Figur 2b aufgefalteten Teile zueinander weisen.

Dann liegt die Abscheidestruktur 1 so vor, dass sie bei einem Reinigungsmodul 10 eingesetzt werden kann (Figur 2e). Figur 2f entspricht Figur 2e, wobei die Abscheidestruktur 1 gedreht dargestellt ist, was durch Pfeile verdeutlicht ist. Nach dem Gebrauch in einem Reinigungsmodul 10, beispielsweise beim Entsorgen des Reinigungsmoduls 10, kann die Abscheidestruktur 1 durch eine einzige Faltoperation (Figur 2g) im Wesentlichen flach gemacht werden (Figur 2h). Dies kann die Entsorgung vereinfachen.

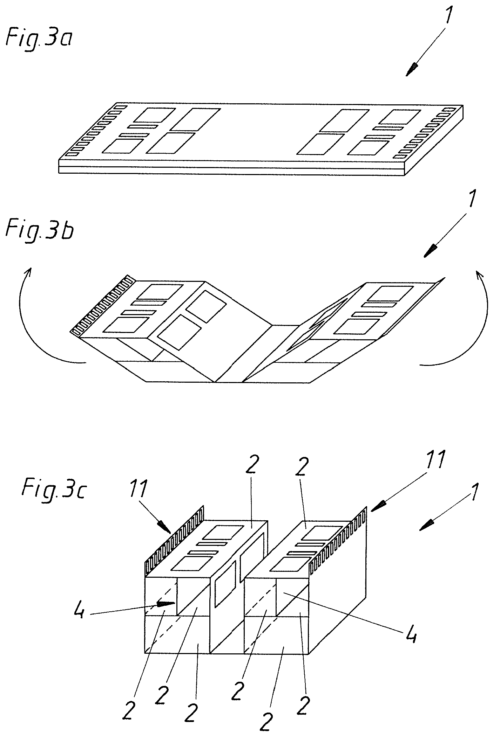

Die Figuren 3a bis 3c zeigen eine weitere erfindungsgemäße Abscheidestruktur 1. Diese kann aus dem Auslieferungszustand (Figur 3a) durch eine Faltoperation (Figur 3b), welche mit Pfeilen angedeutet ist, in den Betriebszustand versetzt werden (Figur 3c). An diesem Ausführungsbeispiel ist besonders deutlich die Anordnung der Stabilisierungswände 4 zwischen den Prallwänden 2 ersichtlich. Die Stabilisierungswände 4 sind im Wesentlichen mittig bezüglich einer Richtung in der Ebene der Prallwände 2 angeordnet. Zu erkennen sind ebenfalls Laschen 11, zwischen welchen einerseits weitere Abscheidestrukturen 1 angeordnet werden können - um Platz zu sparen - und welche andererseits als Abstandshalter fungieren können, sodass die Abscheidestruktur 1 fest im Reinigungsmodul 10 sitzt.

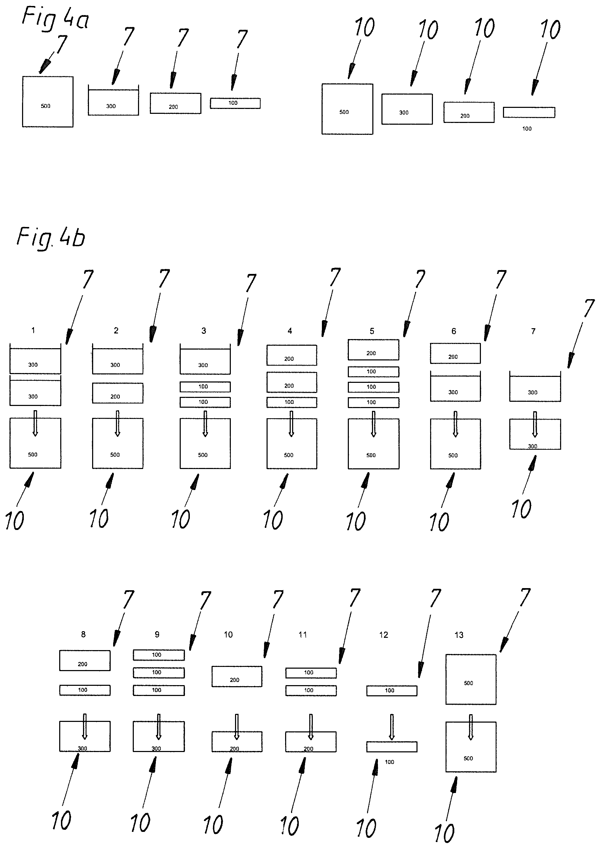

In den Figuren 4a und 4b sind schematisch Reinigungsteilstrukturen 7 verschiedener geometrischer Dimensionen, insbesondere Stärke, sowie verschiedene Kombinationen ihrer Anordnung in einem Reinigungsmodul 10 dargestellt. Die Reinigungsteilstrukturen 7 sind in dieser Ausführung in drei verschiednen Stärken von 100 mm, 200 mm, 300 mm oder 500 mm vorgesehen, wobei die Stärken jeweils auf den Reinigungsteilstrukturen 7 vermerkt sind. Ähnlich gibt es Reinigungsmodule 10 in verschiedenen Ausführungsformen, welche sich durch die Gesamtstärke an Reinigungsteilstrukturen 7, welche sie in der Lage sind aufzunehmen, unterscheiden. Auch hier sind die verschiedenen Gesamtstärken 100 mm, 200 mm, 300 mm oder 500 mm auf den Reinigungsmodulen 10 vermerkt.

In Figur 4b sind einige verschiedene Kombinationsmöglichkeiten dargestellt, welche durchnummeriert sind. Bei den Ausführungen 1 bis 6 dient jeweils ein Reinigungsmodul 10, welches Reinigungsteilstrukturen 7 mit einer Gesamtstärke von 500 mm aufnehmen können. Bei den Ausführungen 7 bis 9 nimmt das Reinigungsmodul 10 Reinigungsteilstrukturen mit Gesamtstärke von 300 mm auf. Die Ausführungen 10 und 11 betreffen Reinigungsmodule 10 mit 200 mm Gesamtstärke. Ausführungsform 12 betrifft ein Reinigungsmodul mit 100 mm Gesamtstärke. Ausführungsform 13 betrifft ein Reinigungsmodul mit 500 mm Gesamtstärke Die verschiedenen Kombinationsmöglichkeiten sind daraus ersichtlich.

Zu bemerken ist, dass die Reinigungsteilstruktur 7, welche 300 mm stark ist, über Laschen 11 verfügt. Der Übersichtlichkeit halber sind nicht alle Laschen 11 mit Bezugszeichen versehen. Dadurch kann diese als Abscheidestruktur 1 ausgeführte Reinigungsteilstruktur 7 als Reinigungsteilstruktur 7 mit Stärke 300 mm (Ausführungsformen 6 und 7 in Figur 4b) oder mit Stärke 200 mm (Ausführungsform 1 aus Figur 4b) dienen.

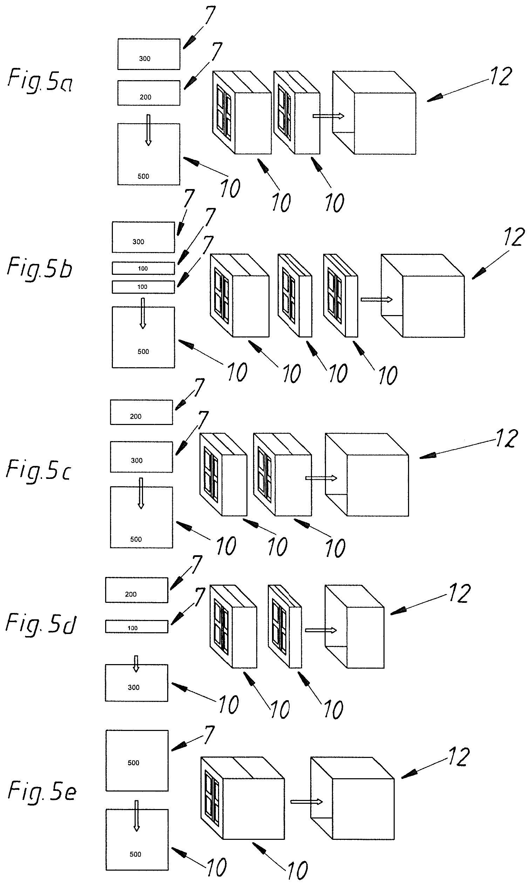

Erfindungsgemäße Reinigungsmodule 10 können hintereinander in Einschubrahmen 12 angeordnet werden. Auch hier sind verschiedene Kombinationen möglich was zum einen schematisch (links) und zum anderen perspektivisch (rechts) jeweils in den Figuren 5a bis 5e dargestellt ist. Bevorzugt werden Reinigungsmodule 10, welche auf gröbere Lackverunreinigungen bzw. Lacktröpfchen optimiert sind dem verunreinigten Luftstrom zugewandt angeordnet. Diese können dann einzeln gewechselt werden. Diejenigen Reinigungsmodule 10, welche ihre Kapazitätsgrenze später erreichen, können länger in den Einschubrahmen 12 verweilen.

## Patentansprüche

1. Reinigungsmodul (10) zum Reinigen eines Luftstroms mit
- einem Hohlkörper (5), welcher eine Eintrittsöffnung für den Eintritt des zu reinigenden Luftstroms und eine Austrittsöffnung für den Austritt des gereinigten Luftstroms aufweist, und
- einer Reinigungsstruktur zum Reinigen des Luftstroms durch Abscheidung von Partikeln und/oder zur Filtration des Luftstroms,
wobei die Reinigungsstruktur wenigstens zwei voneinander gesonderte Reinigungsteilstrukturen (7) aufweist, welche über ein Öffnungselement (8) am Hohlkörper (5) aus dem Hohlkörper (5) entnehmbar und/oder im Hohlkörper (5) anordenbar sind, wobei zumindest eine der wenigstens zwei Reinigungsteilstrukturen eine Abscheidestruktur (1) zur Reinigung eines Luftstroms aufweist, welche Abscheidestruktur (1) wenigstens zwei, in Richtung des Luftstroms aufeinanderfolgende Prallwände (2) beinhaltet, welche mit Öffnungen (3) versehen sind, wobei zwischen den wenigstens zwei Prallwänden (2) wenigstens eine quer zu den Prallwänden (2) ausgerichtete Stabilisierungswand (4) angeordnet ist.

2. Reinigungsmodul nach Anspruch 1, **dadurch gekennzeichnet, dass** die wenigstens eine Stabilisierungswand (4) mit den wenigstens zwei Prallwänden (2) in Verbindung steht.

3. Reinigungsmodul nach Anspruch 2, **dadurch gekennzeichnet, dass** die wenigstens eine Stabilisierungswand (4) mit den wenigstens zwei Prallwänden faltbar und/oder gelenkig in Verbindung steht.

4. Reinigungsmodul nach einem der Ansprüche 1 bis 3, **dadurch gekennzeichnet, dass** die wenigstens eine Stabilisierungswand (4) im Wesentlichen parallel zum Luftstrom ausgerichtet ist.

5. Reinigungsmodul nach einem der Ansprüche 1 bis 4, **dadurch gekennzeichnet, dass** die wenigstens zwei Reinigungsteilstrukturen (7) eine Filterstruktur (9) umfassen.

6. Reinigungsmodul nach einem der Ansprüche 1 bis 5, **dadurch gekennzeichnet, dass** der Hohlkörper (5) im Wesentlichen quaderförmig ist.

7. Reinigungsmodul nach einem der Ansprüche 1 bis 6, **dadurch gekennzeichnet, dass** die Reinigungsteilstrukturen (7) in einer Ansicht entlang einer Achse, welche beim im Hohlkörper (5) angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers (5) im Wesentlichen entspricht.

8. Reinigungsmodul nach einem der Ansprüche 1 bis 7, **dadurch gekennzeichnet, dass** die Abscheidestruktur (1) zusammenfaltbar ist.

9. Reinigungsmodul nach Anspruch 8, **dadurch gekennzeichnet, dass** die Abscheidestruktur (1) nach dem Zusammenfalten im Wesentlichen flach ist.

10. Reinigungsmodul nach Anspruch 8 oder 9, **dadurch gekennzeichnet, dass** das Zusammenfalten der Abscheidestruktur (1) beim im Hohlkörper (5) angeordneten Zustand durch Innenwandungen des Hohlkörpers (5) gehemmt ist.

11. Reinigungsmodul nach einem der Ansprüche 1 bis 10, **dadurch gekennzeichnet, dass** die Abscheidestruktur (1) quer zu einer Richtung des Luftstroms versetzte und/oder entlang der Richtung des Luftstroms in ihrer Größe unterschiedliche Öffnungen (3) aufweist.

12. Reinigungsmodul nach einem der Ansprüche 1 bis 11, **dadurch gekennzeichnet, dass** der Hohlkörper (5) und/oder die Abscheidestruktur (1) aus Karton, Papier oder Pappe besteht.

13. Reinigungsmodul nach einem der Ansprüche 1 bis 12, **dadurch gekennzeichnet, dass** die Abscheidestruktur (1) wenigstens zwei im Wesentlichen parallel zum Luftstrom ausgerichtete Laschen (11) aufweist, zwischen denen im Hohlkörper eine weitere Abscheidestruktur (1) anordenbar ist.

14. Reinigungsmodul nach einem der Ansprüche 1 bis 13, **dadurch gekennzeichnet, dass** die wenigstens eine Stabilisierungswand (4) im Wesentlichen mittig bezüglich einer Richtung in der Ebene der Prallwände (2) angeordnet ist.

## Claims

1. A cleaning module (10) for cleaning an air flow comprising
- a hollow body (5) which has an intake opening (6) for the intake of the air flow to be cleaned and an outlet opening for the outlet of the cleaned air flow, and
- a cleaning structure for cleaning the air flow by separation of particles and/or for filtration of the air flow,
wherein the cleaning structure has at least two mutually separate cleaning sub-structures (7) which by way of an opening element (8) on the hollow body (5) can be removed from the hollow body (5) and/or can be arranged in the hollow body (5), wherein at least one of the at least two cleaning sub-structures includes at least one separation structure (1) for cleaning an air flow, which separation structure (1) includes at least two baffle walls (2) which occur in succession in the direction of the air flow and which are provided with openings (3), wherein arranged between the at least two baffle walls (2) is at least one stabilization wall (4) oriented transversely relative to the baffle walls (2).

2. A cleaning module as set forth in claim 1 **characterised in that** the at least one stabilization wall (4) is connected to the at least two baffle walls (2).

3. A cleaning module as set forth in claim 2 **characterised in that** the at least one stabilization wall (4) is connected to the at least two baffle walls foldably and/or hingedly (2).

4. A cleaning module as set forth in one of claims 1 through 3 **characterised in that** the at least one stabilization wall (4) is oriented substantially parallel to the air flow.

5. A cleaning module or set as set forth in one of claims 1 through 4 **characterised in that** the at least two cleaning sub-structures (7) include a filter structure (9).

6. A cleaning module or set as set forth in one of claims 1 through 5 **characterised in that** the hollow body (5) is substantially cuboidal.

7. A cleaning module or set as set forth in one of claims 1 through 6 **characterised in that** in a view along an axis which is substantially parallel to the air flow in the condition of being arranged in the hollow body (5) the cleaning sub-structures (7) have a contour which substantially corresponds to a cross-section, preferably perpendicular to the air flow, of a hollow space in the hollow body (5).

8. A cleaning module or set as set forth in one of claims 1 through 7 **characterised in that** the separation structure (1) can be folded together.

9. A cleaning module or set as set forth in claim 8 **characterised in that** the separation structure (1) is substantially flat after being folded together.

10. A cleaning module or set as set forth in claim 8 or 9 **characterised in that** the separation structure (1) is inhibited in terms of being folded together in the condition of being arranged in the hollow body (5) by internal walls in the hollow body (5).

11. A cleaning module or set as set forth in one of claims 1 through 10 **characterised in that** the separation structure (1) has openings (3) which are displaced transversely relative to a direction of the air flow and/or which are different in their size along the direction of the air flow.

12. A cleaning module or set as set forth in one of claims 1 through 11 **characterised in that** the hollow body (5) and/or the separation structure (1) comprises cardboard, paper or card.

13. A cleaning module or set as set forth in one of claims 1 through 12 **characterised in that** the separation structure (1) has at least two flaps (11) which are oriented substantially parallel to the air flow and between which a further separation structure (1) can be arranged in the hollow body.

14. A cleaning module or set as set forth in one of claims 1 through 13 **characterised in that** the at least one separation structure (4) is arranged substantially centrally in reference to a direction in the plane of the baffle walls (2).

## Revendications

1. Module de nettoyage (10) pour le nettoyage d'un courant d'air avec
- un corps creux (5) qui présente une ouverture d'entrée pour l'entrée du courant d'air à nettoyer et une ouverture de sortie pour la sortie du courant d'air nettoyé, et
- une structure de nettoyage pour le nettoyage du courant d'air par séparation de particules et/ou pour la filtration du courant d'air,
dans lequel la structure de nettoyage présente au moins deux structures partielles de nettoyage (7) séparées l'une de l'autre qui peuvent être retirées du corps creux (5) et/ou peuvent être placées dans le corps creux (5) par un élément d'ouverture (8) sur le corps creux (5), dans lequel au moins une des au moins deux structures partielles de nettoyage présente une structure de séparation (1) pour le nettoyage d'un courant d'air, laquelle structure de séparation (1) contient au moins deux parois d'impact (2) successives en direction du courant d'air qui sont pourvues d'ouvertures (3), dans lequel au moins une paroi de stabilisation (4) orientée transversalement aux parois d'impact (2) est agencée entre les au moins deux parois d'impact (2).

2. Module de nettoyage selon la revendication 1, **caractérisé en ce que** l'au moins une paroi de stabilisation (4) est en liaison avec les au moins deux parois d'impact (2).

3. Module de nettoyage selon la revendication 2, **caractérisé en ce que** l'au moins une paroi de stabilisation (4) est en liaison de manière pliante et/ou articulée avec les au moins deux parois d'impact.

4. Module de nettoyage selon l'une des revendications 1 à 3, **caractérisé en ce que** l'au moins une paroi de stabilisation (4) est orientée sensiblement parallèlement au courant d'air.

5. Module de nettoyage selon l'une des revendications 1 à 4, **caractérisé en ce que** les au moins deux structures partielles de nettoyage (7) comportent une structure de filtre (9).

6. Module de nettoyage selon l'une des revendications 1 à 5, **caractérisé en ce que** le corps creux (5) est sensiblement en forme de parallélépipède.

7. Module de nettoyage selon l'une des revendications 1 à 6, **caractérisé en ce que** les structures partielles de nettoyage (7) présentent, dans une vue le long d'un axe qui est sensiblement parallèle au courant d'air à l'état placé dans le corps creux (5), un contour qui correspond sensiblement à une section transversale, de préférence perpendiculaire au courant d'air, d'un espace creux du corps creux (5).

8. Module de nettoyage selon l'une des revendications 1 à 7, **caractérisé en ce que** la structure de séparation (1) peut être repliée.

9. Module de nettoyage selon la revendication 8, **caractérisé en ce que** la structure de séparation (1) est sensiblement plate après le repliage.

10. Module de nettoyage selon la revendication 8 ou 9, **caractérisé en ce que** le repliage de la structure de séparation (1) est empêché à l'état placé dans le corps creux (5) par des parois intérieures du corps creux (5).

11. Module de nettoyage selon l'une des revendications 1 à 10, **caractérisé en ce que** la structure de séparation (1) présente des ouvertures (3) décalées transversalement à un sens du courant d'air et/ou de grandeurs différentes le long de la direction du courant d'air.

12. Module de nettoyage selon l'une des revendications 1 à 11, **caractérisé en ce que** le corps creux (5) et/ou la structure de séparation (1) se compose de carton, de papier ou de papier cartonné.

13. Module de nettoyage selon l'une des revendications 1 à 12, **caractérisé en ce que** la structure de séparation (1) présente au moins deux languettes (11) orientées sensiblement parallèlement au courant d'air, entre lesquelles une autre structure de séparation (1) peut être placée dans le corps creux.

14. Module de nettoyage selon l'une des revendications 1 à 13, **caractérisé en ce que** l'au moins une paroi de stabilisation (4) est placée sensiblement au milieu par rapport à une direction dans le plan des parois d'impact (2).
